# EUROPÄISCHE PATENTSCHRIFT

(11) **EP 1 148 965 B1**
(45) Veröffentlichungstag und Bekanntmachung des Hinweises auf die Patenterteilung: **22.10.2008**
(21) Anmeldenummer: 00903659.1
(22) Anmeldetag: 31.01.2000
(51) Int. Cl.: B23D 61/02, B23D 59/02

(54) **SÄGEBLATT MIT LANGLOCHARTIGEN LUFTDURCHTRITTSÖFFNUNGEN**
SAW BLADE WITH ELONGATED AIR PASSAGES
LAME DE SCIE COMPORTANT DES PASSAGES D'AIR ALLONGES

(30) Priorität: 01.02.1999 DE 29901713 U
(43) Veröffentlichungstag der Anmeldung: 31.10.2001
(73) Patentinhaber: Powertools International Gmbh, 25474 Ellerbek (DE)
(72) Erfinder: MUMMENHOFF, Heinrich, D-42855 Remscheid (DE)
(74) Vertreter: Zapf, Christoph
(86) Internationale Anmeldenummer: PCT/EP2000/000765
(87) Internationale Veröffentlichungsnummer: WO 2000/045985

(56) Entgegenhaltungen:
- DE-A- 3 022 967
- FR-A- 2 192 483
- US-A- 4 776 251
- US-A- 5 555 788
- PATENT ABSTRACTS OF JAPAN vol. 015, no. 049 (M-1078), 6. Februar 1991 (1991-02-06) & JP 02 284817 A (MASAYUKI OKA), 22. November 1990 (1990-11-22)
- PATENT ABSTRACTS OF JAPAN vol. 015, no. 120 (M-1096), 25. März 1991 (1991-03-25) -& JP 03 009802 A (HAKAMADA SEISAKUSHO:KK), 17. Januar 1991 (1991-01-17)
- PATENT ABSTRACTS OF JAPAN vol. 016, no. 122 (M-1226), 27. März 1992 (1992-03-27) & JP 03 287382 A (NORITAKE DIA KK), 18. Dezember 1991 (1991-12-18)

## Beschreibung

Die vorliegende Erfindung betrifft ein Sägeblatt nach dem Oberbegriff des Anspruchs 1 bzw. 13.

Aus der internationalen Patentanmeldung WO 97/13609 ist ein derartiges Sägeblatt für eine Kreissäge bekannt, welches als Kreisscheibe mit einem Radius und einer Dicke ausgebildet ist, wobei am Umfang der Kreisscheibe Zähne und in ihren, im wesentlichen kreisförmigen Seitenflächen langlochartige Luftdurchtrittsöffnungen angeordnet sind. Ein solches Sägeblatt ist insbesondere zur Verwendung für eine Kreissäge mit zwei parallelen, koaxial in einander entgegengesetzten Drehrichtungen antreibbaren Sägeblättern vorgesehen. In der Anmeldung WO 97/13609 sind in dem Sägeblatt (zur Verhinderung von Magnetisierungen) langlochartige, insbesondere im Querschnitt etwa bananenförmige, im wesentlichen radial gerichtete Luftdurchtrittsöffnungen beschrieben, die sich bis in das Rotationszentrum des Sägeblattes erstrecken.

Ein Sägeblatt der eingangs beschriebenen Art ist vorzugsweise zur Verwendung für eine Kreissäge mit zwei parallelen, koaxial in einander entgegengesetzten Drehrichtungen antreibbaren Sägeblättern geeignet, wie sie in der deutschen Gebrauchsmusteranmeldung DE 298 04 220.7 vorgeschlagen wurde.

Gemäß dieser deutschen Gebrauchsmusteranmeldung wird für ein Trenngerät, insbesondere für eine Kreissäge der hier eingangs genannten Art, mit konstruktiv einfachen und kostengünstigen Maßnahmen ein verschleißarmer und störungsunanfälligen Betrieb gewährleistet. Dies wird durch derart ausgelegte mechanische Haltemittel für die Trennelemente (Sägeblätter) erreicht, daß im montierten Zustand zwischen den Trennelementen zwangsläufig ein reibungsverhindernder Spaltabstand gewährleistet ist. Auf diese Weise erübrigt sich die Erzeugung eines Druckpolsters zwischen den Sägeblättern. Der Spaltabstand wird allein durch die mechanische Halterung der Sägeblätter gewährleistet, wobei die Haltemittel zweckmäßigerweise in Anpassung an die Abmessungen, insbesondere an die Dicke der Sägeblätter, derart ausgelegt sind, daß im montierten Zustand der Spaltabstand zwischen den Trennelementen - vor allem im Bereich von am Außenumfang angeordneten Zähnen - eine lichte Weite im Bereich von mindestens 2/100 mm bis höchstens etwa 1/10 mm aufweist. Durch einen solchen Abstand wird einerseits sichergestellt, daß auch während des Betriebs praktisch keine Reibung zwischen den Trennelementen entsteht, und andererseits wird vermieden, daß sich beim Trennvorgang abgetrennte Materialteile (Späne) zwischen die Sägeblätter drücken und diese dann durch Keilwirkung auseinanderdrängen könnten.

Sowohl das in der internationalen Patentanmeldung WO 97/13609 als auch das in der deutschen Gebrauchsmusteranmeldung DE 298 04 220.7 beschriebene Sägeblatt ist hinsichtlich der Abführung der beim Trennvorgang entstehenden Wärme nicht optimal. Zudem ist bei dem bekannten Sägeblatt mit den radialen Schlitzen ist außerdem nachteilig, daß bei einem fest eingespannten Blatt dessen Stabilität aufgrund der Schlitze gemindert wird.

Ein Sägeblatt der eingangs genannten Art ist in der US 4 776 251 A beschrieben. Dieses bekannte Sägeblatt soll leicht zu hämmern, aber dabei bruchbeständig sowie langlebig sein. Es soll im Lauf kühler und ruhiger als andere bekannte Sägeblätter sein. Weder sollen Halterung oder Schnittholz zerstört werden, noch soll eine unerwünschte Sägestaubablagerung in den Luftdurchtrittsöffnungen stattfinden können. Zu diesem Zweck weist das Sägeblatt langlochartige Luftdurchtrittsöffnungen auf, die lasergeschnitten und schlitzartig mit äußerst geringer Breite ausgebildet sind.

Der vorliegenden Erfindung liegt die Aufgabe zugrunde, ein Sägeblatt der eingangs genannten Art bei hoher mechanischer Stabilität hinsichtlich seines Laufverhaltens, insbesondere unter Berücksichtigung seiner thermischen Charakteristika, zu verbessern.

Erfindungsgemäß wird dies durch ein Sägeblatt mit den Merkmalen des Anspruchs 1 erreicht, bei dem die langlochartigen Luftdurchtrittsöffnungen eine Breite aufweisen, die eine Größe im Bereich des etwa 0,09- bis 0,17-fachen des Radius der Kreisscheibe besitzt.

In alternativer Ausführung der Erfindung wird dies durch ein Sägeblatt mit den Merkmalen des Anspruchs 13 erreicht, bei dem mindestens in einer Seitenfläche der Kreisscheibe, insbesondere der Seitenfläche, die bei der Montage dem zweiten Sägeblatt zugewandt ist, taschenartige Vertiefungen ausgebildet sind, in denen die langlochartigen in de äußeren Bereich angeordneten Luftdurchtrittsöffnungen, vorzugsweise am äußeren Rand der Vertiefungen, und gegebenenfalls in einem inneren Bereich der Seitenflächen, der sich insbesondere in radialer Richtung gesehen unmittelbar an einen Halterungsbereich für mechanische Haltemittel anschließt, liegende Luftdurchtrittsöffnungen, vorzugsweise am inneren Rand der Vertiefungen, angeordnet sind.

Ein solches Sägeblatt weist vorteilhafterweise einerseits eine hohe Stabilität auf, da die Luftdurchtrittsöffnungen diese nicht mindern, andererseits zeigt es durch eine optimierte Abführung der beim Sägen entstehenden Wärme verbesserte Laufeigenschaften.

Das erfindungsgemäße Sägeblatt ist dann besonders effizient, wenn sich die langlochartigen Luftdurchtrittsöffnungen im wesentlichen in umfangsparalleler Richtung erstrecken, d.h. den Radius der Kreisscheibe in einem rechten Winkel schneiden. Außerdem ist es insbesondere von Vorteil, wenn die innere Begrenzung durch den Umfang eines Kreises mit einem Radius gebildet ist, der eine Größe von zwei Dritteln des Radius der Kreisscheibe besitzt. Durch diese Ausbildung wird der Hauptanteil der entstehende Wärme bereits am Ort der Entstehung abgeführt, und eine nennenswerte Weiterleitung der Wärme bis in das Rotationszentrum des Sägeblattes wird verhindert.

Weitere vorteilhafte Ausgestaltungsmerkmale der Erfindung sind in den Unteransprüchen sowie der folgenden Beschreibung enthalten.

Anhand der Zeichnung soll die Erfindung in Form zweier Ausführungsbeispiele näher erläutert werden. Dabei zeigen:
- Fig. 1: eine Seitenansicht einer ersten Ausführung eines erfindungsgemäßen Sägeblattes für eine Kreissäge,
- Fig. 2: eine Seitenansicht einer zweiten Ausführung eines erfindungsgemäßen Sägeblattes für eine Kreissäge,
- Fig. 3: eine Ansicht auf eine Zahnbrust eines erfindungsgemäßen Sägeblattes in nicht maßstabsgerechter Darstellung.

In den verschiedenen Figuren der Zeichnung sind gleiche Teile stets mit denselben Bezugszeichen versehen und werden daher in der Regel auch jeweils nur einmal beschrieben.

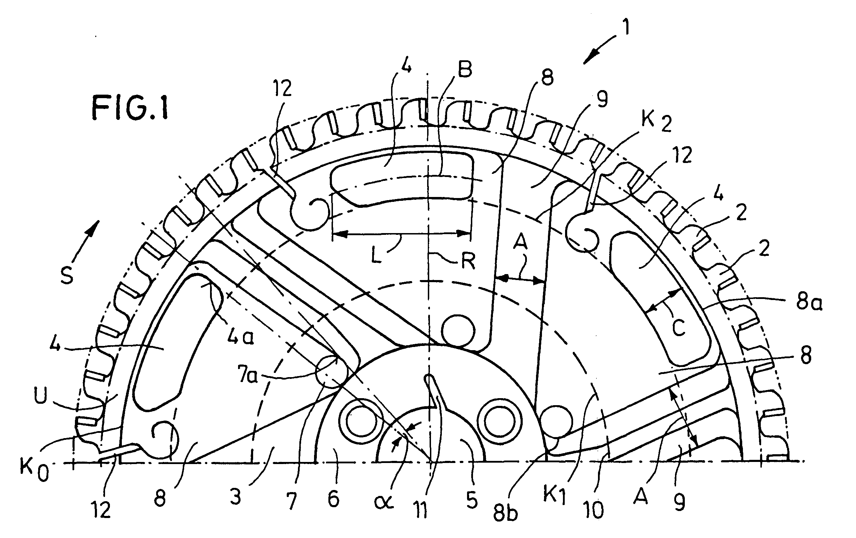

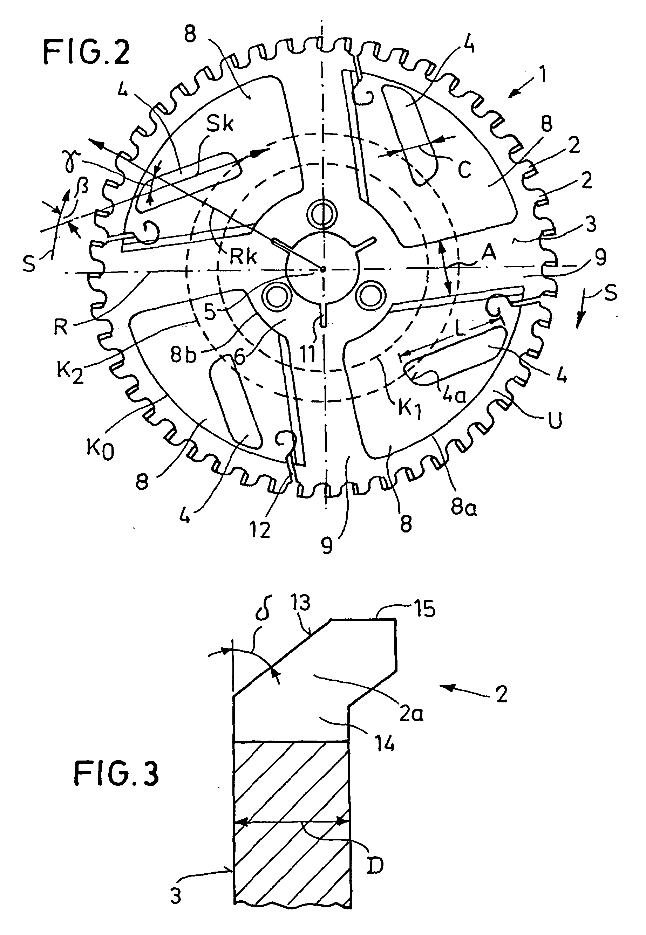

Wie zunächst die in Fig. 1 dargestellte erste Ausführung eines erfindungsgemäßen Sägeblattes zeigt, ist ein erfindungsgemäßes Sägeblatt als Kreisscheibe 1 mit einem Radius R und einer Dicke D (Fig. 3) ausgebildet, wobei am Umfang der Kreisscheibe 1 Zähne 2 und in ihren, im wesentlichen kreisförmigen Seitenflächen 3 langlochartige Luftdurchtrittsöffnungen 4 angeordnet sind. Wie bereits erwähnt, kann ein solches erfindungsgemäßes Sägeblatt insbesondere in einer Kreissäge mit zwei parallelen, koaxial in einander entgegengesetzten Drehrichtungen S antreibbaren Sägeblättern verwendet werden.

Die erste Ausführung eines erfindungsgemäßen Sägeblattes zeigt, daß eine jeweilige Längsausdehnung der langlochartigen Luftdurchtrittsöffnungen 4 in einer Richtung verläuft, die sich in der Verlaufsrichtung eines umfangsgemäßen Bogens B in den Seitenflächen 3 erstreckt, wobei die langlochartigen Luftdurchtrittsöffnungen 4 in einem äußeren durch eine Kreisringfläche gebildeten Bereich liegen, dessen äußere Begrenzung durch den Umfang eines Außenkreises K₀ mit einem Radius in der Größe des etwa 0,75- bis 0,95-fachen des Radius R der Kreisscheibe 1 gebildet ist, und dessen innere Begrenzung durch den Umfang eines ersten Innenkreises K₁ mit etwa dem halben Radius R der Kreisscheibe 1 gebildet sind. Die äußere Begrenzung (K₀) sichert dabei, daß zwischen den Zähnen 2 und dem Bereich der langlochartigen Luftdurchtrittsöffnungen 4 ein ausreichend breiter stabilisierender Umfangsrand U verbleibt. Die langlochartigen Luftdurchtrittsöffnungen 4 erstrecken sich im wesentlichen in umfangsparalleler Richtung, d.h. sie schneiden den Radius der Kreisscheibe jeweils in einem rechten Winkel.

Die innere Begrenzung der Kreisringfläche ist dabei, wie dargestellt, insbesondere durch den Umfang eines zweiten Innenkreises K₂ mit einem Radius gebildet, der eine Größe von zwei Dritteln des Radius R der Kreisscheibe 1 besitzt. Durch diese Lokalisierung der langlochartigen Luftdurchtrittsöffnungen 4 wird eine Wärmeleitung bis in das Rotationszentrum des Sägeblattes wirksam verhindert.

In der dargestellten ersten Ausführung besitzt das Sägeblatt sechs langlochartige Luftdurchtrittsöffnungen 4. Diese Anzahl kann variieren. Es ist mit Vorteil auch eine Anzahl von drei bis zwölf Luftdurchtrittsöffnungen 4 realisierbar.

Die langlochartigen Luftdurchtrittsöffnungen 4 weisen eine Breite C auf, die eine Größe im Bereich des etwa 0,09- bis 0,17-fachen, vorzugsweise des etwa 0,11- bis 0,14-fachen, des Radius R der Kreisscheibe 1 besitzt. Die Summe der Längen L der langlochartigen Luftdurchtrittsöffnungen 4 weist dabei eine Gesamtlänge auf, die etwa im Bereich des 0,2- bis 0,6-fachen, vorzugsweise des 0,4-fachen, der Umfangslänge der Kreisscheibe 1 liegt. Die Abmaße im dargestellten Bereich stellen optimierte Werte für ein erfindungsgemäße Sägeblatt dar.

Wie auch in der deutschen Gebrauchsmusteranmeldung DE 298 04 220.7 vorgeschlagen wurde, ist in einem Bereich einer Kreisfläche, deren äußere Begrenzung durch den Umfang des Kreises K₁ mit maximal dem halben Radius R der Kreisscheibe 1 gebildet ist, ein, insbesondere eine zentrische Öffnung 5 aufweisender, Halterungsbereich 6 für mechanische Haltemittel angeordnet, der insbesondere zur Anlage und Zentrierung eines lösbar mit der Kreisscheibe 1 verbindbaren Halteflansches dient. Durch die mechanischen Haltemittel für das Sägeblatt wird erreicht, daß im montierten Zustand zwischen zwei Sägeblättern ein reibungsverhindernder Spaltabstand gewährleistet ist, der bei den am Außenumfang angeordneten Zähnen 2 - eine lichte Weite im Bereich von mindestens 2/100 mm bis höchstens etwa 1/10 mm aufweisen kann. Wie bereits erwähnt, wird durch einen solchen Abstand einerseits sichergestellt, daß während des Betriebs praktisch keine Reibung zwischen den Sägeblättern entsteht, und andererseits wird vermieden, daß sich beim Trennvorgang abgetrennte Späne zwischen die Sägeblätter drücken.

In einem inneren Bereich der Seitenflächen 3, insbesondere sich in radialer Richtung gesehen unmittelbar an den Halterungsbereich 6 für mechanische Haltemittel anschließend, sind weitere (kleinere) Luftdurchtrittsöffnungen 7 angeordnet, die insbesondere kreisförmig ausgebildet sind. Jeder, im wesentlichen umfangsnahen, äußeren langlochartigen Luftdurchtrittsöffnung 4 ist dabei eine im wesentlichen umfangsferne, innere Luftdurchtrittsöffnung 7 zugeordnet. Dadurch entsteht vorteilhafterweise bei Rotation des erfindungsgemäßen Sägeblattes durch die auftretenden Zentrifugalkräfte eine die Wärmeableitung begünstigende Luftströmung von innen nach außen.

Weiterhin zeigt Fig. 1, daß eine in Drehrichtung S weisende vordere Begrenzung 4a der äußeren Luftdurchtrittsöffnungen 4 gegenüber einer in Drehrichtung S weisenden vorderen Begrenzung 7a der zugeordneten inneren Luftdurchtrittsöffnungen 7 entgegen der Drehrichtung S jeweils um einen Winkel α von etwa 5° bis 35° versetzt ist, was einer vorteilhaften Ausbildung der Luftströmung förderlich ist.

Die inneren Luftdurchtrittsöffnungen 7 können mit Vorteil zu ebendiesem Zweck einseitig, insbesondere in der Seitenfläche 2, die bei der Montage dem zweiten Sägeblatt zugewandt ist, gesenkt sein.

Fig. 1 zeigt des weiteren, daß in der in der Aufsicht dargestellten Seitenfläche 3 der Kreisscheibe 1 (Es kann sich dabei wiederum insbesondere um die Seitenfläche 3 handeln, die bei der Montage dem zweiten Sägeblatt zugewandt ist.) taschenartige Vertiefungen 8 ausgebildet sind, in denen die äußeren Luftdurchtrittsöffnungen 4, vorzugsweise am äußeren Rand 8a der Vertiefungen 8, und die inneren Luftdurchtrittsöffnungen 7, vorzugsweise am inneren Rand 8b der Vertiefungen 8, angeordnet sind. Die taschenartigen Vertiefungen 8 dienen einer optimalen Luftführung und begünstigen ebenfalls die Wärmeabführung durch Konvektion.

Die Tiefe der taschenartigen Vertiefungen 8 kann dabei mit Vorteil etwa das 0,08- bis 0,12-fache der Dicke D der Kreisscheibe 1 betragen. Die mechanische Stabilität des Sägeblattes wird dadurch nicht beeinträchtigt. Dies gilt auch, wenn die taschenartigen Vertiefungen 8 auf beiden Seitenflächen 3 der Kreisscheibe 1 ausgebildet sind.

Zwischen den taschenartigen Vertiefungen 8 verlaufen (mit den Vorteilen einer Stabilisierung und einer weitgehenden Segmentierung der einzelnen Luftströme von den inneren Luftdurchtrittsöffnungen 7 zu den äußeren Luftdurchtrittsöffnungen 4) Rippen 9, deren Höhe gegenüber der Dicke D der Kreisscheibe 1, insbesondere etwa um das 0,01- bis 0,03-fache der Dicke D der Kreisscheibe 1 reduziert ist. Die Rippen 9 gehen von dem Halterungsbereich 6 für mechanische Haltemittel aus und verlaufen entgegen der Drehrichtung S weisend zentrifugal nach außen. Eine mittlere Breite A der Rippen 9 kann dabei mindestens etwa das 0,15-fache des Radius R der Kreisscheibe 1 betragen.

Innerhalb zumindest einiger (oder auch aller) Rippen 9 können kanalartige Vertiefungen 10 angeordnet sein, die vorteilhafterweise die Funktion von Schmierstoffkanälen erfüllen können. Die Tiefe dieser kanalartigen Vertiefungen 10 kann dabei mit Vorteil etwa genauso groß sein wie diejenige der taschenartigen Vertiefungen 8. Durch den vorstehend beschriebenen, entgegen der Drehrichtung S weisenden, zentrifugal nach außen führenden Verlauf der Rippen 9, und damit der kanalartigen Vertiefungen 10, wird unter der Wirkung der Trägheitskraft ein optimaler Schmierstofftransport gefördert. Der Einsatz eines Schmierstoffes bzw. eines Kühl-Schmierstoffes dient der Reibungsminderung, vermindert die beim Sägen entstehende dissipative Wärmemenge und führt diese aufgrund seiner im Vergleich mit Luft größeren Wärmekapazität schneller ab.

Die Zufuhr des Schmierstoffes kann mit Vorteil über zentrifugal nach außen verlaufende Schlitze 11 im Halterungsbereich 6 für mechanische Haltemittel erfolgen, wobei die Schlitze 11 insbesondere von der zentrischen Öffnung 5 ausgehen und entgegen der Drehrichtung S weisend nach außen verlaufen können.

Außerdem können, wie Fig. 1 zeigt, im Umfangsbereich der Kreisscheibe 1 an sich bekannte Dehnungsschlitze 12 vorgesehen sein, die in den beiden Ausführungsbeispielen eine notenschlüsselartige Gestalt besitzen. Diese Dehnungsschlitze 12 kompensieren die negativen Auswirkungen der entstehenden Wärme im Umfangsbereich (Wärmedehnung).

Die in Fig. 2 dargestellte zweite Ausführung eines erfindungsgemäßen Sägeblattes unterscheidet sich von der ersten Ausführung insbesondere durch den Verlauf der langlochartigen Luftdurchtrittsöffnungen 4. Diese erstrecken sich hier im wesentlichen in der Richtung einer Sekante Sk durch die Seitenfläche 3 der Kreisscheibe 1. Die Sekante Sk schneidet in ihrer im wesentlichen zentrisch verlaufenden Richtung (Pfeil) sowohl die Drehrichtung S in einem spitzen Winkel β als auch einen Radialstrahl Rs in einem spitzen Winkel γ. Dabei ist der Winkel (β) zwischen der Sekante (Sk) und der Drehrichtung (S) kleiner als etwa 55° und liegt vorzugsweise im Bereich von etwa 10° bis 30°, und der Winkel γ zwischen der Sekante Sk und dem Radialstrahl Rs ist nicht kleiner als etwa 45° und besitzt einen optimalen Bereich von etwa 60° bis 80°. Auch mit dieser Ausführung können einerseits eine hohe Stabilität des erfindungsgemäßen Sägeblattes und andererseits durch eine optimierte Wärmeabführung äußerst günstige Laufeigenschaften erzielt werden.

Bei der zweiten Ausführung der Erfindung sind wie bei der ersten Ausführung taschenartige Vertiefungen 8 mit dazwischenliegenden Rippen 9, jedoch keine zusätzlichen innere Luftdurchtrittsöffnungen 7 ausgebildet. In dieser Ausführung besitzt das Sägeblatt vier langlochartige Luftdurchtrittsöffnungen 4.

Ein weiteres vorteilhaftes Merkmal eines erfindungsgemäßen Sägeblattes ist Fig. 3 zu entnehmen. Diese zeigt - zur besseren Veranschaulichung in nicht maßstabsgerechter, insbesondere in der Höhe gestauchter Darstellung - eine Ansicht auf eine Brust 2a eines Zahnes 2 eines erfindungsgemäßen Sägeblattes. Aus der Darstellung ist zu entnehmen, daß mindestens jeweils eine Flankenfläche 13 der Zähne 2, zweckmäßigerweise auf der Seite der Kreisscheibe 1, die bei der Montage dem zweiten Sägeblatt zugewandt ist, jeweils von einem Fuß 14 der Zähne 2 in Richtung auf eine Spitze 15 der Zähne 2 eine vom Umfangsrand U der Seitenfläche 3 der Kreisscheibe 1 zurückweichende Neigung aufweisen kann. Durch eine solche Neigung wird den negativen Auswirkungen der entstehenden Wärme im Zahnbereich (Wärmedehnung) sicher entgegengewirkt, so daß beim Betrieb einer Säge mit zwei parallelen, koaxial in einander entgegengesetzten Drehrichtungen S antreibbaren Sägeblättern - auch bei den beschriebenen sehr kleinen möglichen Beabstandungen derselben - eine Kollision der Zähne 2 der beiden Sägeblätter miteinander zuverlässig ausgeschlossen ist.

Die vom Umfangsrand U der Seitenfläche 2 der Kreisscheibe zurückweichende Flankenfläche 13 der Zähne 2 kann dabei vorteilhafterweise zur Seitenfläche 2 der Kreisscheibe 1 am Umfangsrand 16 (Dicke D) eine Neigung im Bereich eines Winkels δ von etwa 1° bis 4°, vorzugsweise von 2° bis 3°, aufweisen.

Aus den Ausführungsbeispielen geht bereits hervor, daß z.B. vielfältige Möglichkeiten zur Lokalisierung und Ausbildung der langlochartigen Luftdurchtrittsöffnungen 4 bestehen. Insbesondere sind dies Ausbildungen, die in einem Zwischenbereich zu den beiden dargestellten Ausführungsbeispielen liegen. D.h., daß die jeweilige Längsausdehnung der langlochartigen Luftdurchtrittsöffnungen 4 in einem Richtungsbereich verlaufen kann, der von der Verlaufsrichtung einer Sekante Sk durch die Seitenflächen 3 (wie im zweiten Beispiel) bis zur Verlaufsrichtung eines umfangsgemäßen Bogens B in den Seitenflächen 3 (wie im ersten Beispiel) reichen kann. Die langlochartigen Luftdurchtrittsöffnungen 4 können dabei eine gerade oder gekrümmte Form besitzen. Auf diese Weise wird einerseits eine hohe Stabilität des Sägeblattes erreicht, andererseits entsteht eine vorzugsweise entgegen der Drehrichtung S verlaufende zentrifugal nach außen gerichtete Luftbewegung, durch die eine effiziente Wärmeableitung in unmittelbarer Nähe der Wärmeentstehung gewährleistet ist, wodurch sich die Laufeigenschaften des erfindungsgemäßen Sägeblattes im Vergleich zu bekannten Sägeblättern der eingangs genannten Art verbessern.

Die vorstehenden, auf die Dicke D der Kreisscheibe 1 bezogenen Angaben für die Tiefe der taschenartigen Vertiefungen 8, die Höhe der Rippen 9, die Tiefe der kanalartigen Vertiefungen 10 usw. stellen Optimalwerte für Kreisscheiben 1 in einem Dickenbereich D von etwa 1,2 mm bis 2,0 mm, insbesondere 1,5 mm bis 1,8 mm, dar. Bei einer größeren Dickenabmessung als 2,0 mm kann es zweckmäßig sein, auf die Dicke D bezogen kleinere Werte für diese Größen vorzusehen, indem beispielsweise die für 2,0 mm berechneten Absolutwerte für die Kreisscheibe 1 mit der größeren Dicke verwendet werden.

## Patentansprüche

1. Sägeblatt für eine Kreissäge, welches als Kreisscheibe (1) mit einem Radius (R) und einer Dicke (D) ausgebildet ist, wobei am Umfang der Kreisscheibe (1) Zähne (2) und in ihren, im wesentlichen kreisförmigen Seitenflächen (3) langlochartige Luftdurchtrittsöffnungen (4) angeordnet sind, insbesondere zur Verwendung für eine Kreissäge mit zwei parallelen, koaxial in einander entgegengesetzten Drehrichtungen (S) antreibbaren Sägeblättern, wobei eine jeweilige Längsausdehnung der langlochartigen Luftdurchtrittsöffnungen (4) in einer Richtung verläuft, die sich im Wesentlichen in einer Verlaufsrichtung eines umfangsgemäßen Bogens oder einer Sekante (Sk) durch die Seitenflächen (3) erstreckt, wobei die langlochartigen Luftdurchtrittsöffnungen (4) in einem äußeren durch eine Kreisringfläche gebildeten Bereich liegen, dessen äußere Begrenzung durch den Umfang eines Außenkreises (K₀) mit einem Radius in der Größe des etwa 0,75- bis 0,95-fachen des Radius (R) der Kreisscheibe (1) gebildet ist, und dessen innere Begrenzung durch den Umfang eines ersten Innenkreises (K₁) mit etwa dem halben Radius (R) der Kreisscheibe (1) gebildet sind,
**dadurch gekennzeichnet, daß** die langlochartigen Luftdurchtrittsöffnungen (4) eine Breite (C) aufweisen, die eine Größe im Bereich des etwa 0,09- bis 0,17-fachen des Radius (R) der Kreisscheibe (1) besitzt.

2. Sägeblatt nach Anspruch 1,
**dadurch gekennzeichnet, daß** die innere Begrenzung durch den Umfang eines zweiten Innenkreises (K₂) mit einem Radius gebildet ist, der eine Größe von zwei Dritteln des Radius (R) der Kreisscheibe (1) besitzt.

3. Sägeblatt nach Anspruch 1 oder 2,
**dadurch gekennzeichnet, daß** sich die langlochartigen Luftdurchtrittsöffnungen (4) im wesentlichen in umfangsparalleler Richtung erstrecken, d.h. den Radius (R) der Kreisscheibe (1) in einem rechten Winkel schneiden.

4. Sägeblatt nach Anspruch 1 oder 2,
**dadurch gekennzeichnet, daß** sich die langlochartigen Luftdurchtrittsöffnungen (4) im wesentlichen in der Richtung einer Sekante (Sk) erstrecken, die in ihrer im wesentlichen zentrisch verlaufenden Richtung sowohl die Drehrichtung (S) in einem spitzen Winkel (β) als auch einen Radialstrahl (Rs) in einem spitzen Winkel (γ) schneidet, wobei der Winkel (β) zwischen der Sekante (Sk) und der Drehrichtung (S) kleiner ist als etwa 55° und vorzugsweise im Bereich von etwa 10° bis 30° liegt und der Winkel (γ) zwischen der Sekante (Sk) und dem Radialstrahl (Rs) nicht kleiner ist als etwa 45° und vorzugsweise im Bereich von etwa 60° bis 80° liegt.

5. Sägeblatt nach einem der Ansprüche 1 bis 4,
**gekennzeichnet durch** eine Anzahl von drei bis zwölf, vorzugsweise sechs, langlochartigen Luftdurchtrittsöffnungen (4).

6. Sägeblatt nach einem der Ansprüche 1 bis 5,
**dadurch gekennzeichnet, daß** die langlochartigen Luftdurchtrittsöffnungen (4) eine Breite (C) aufweisen, die eine Größe im Bereich des etwa 0,11- bis 0,14-flachen, des Radius (R) der Kreisscheibe (1) besitzt.

7. Sägeblatt nach einem der Ansprüche 1 bis 6,
**dadurch gekennzeichnet, daß** die Summe der Längen (L) der langlochartigen Luftdurchtrittsöffnungen (4) eine Gesamtlänge aufweist, die etwa im Bereich des 0,2- bis 0,6-fachen, vorzugsweise des 0,4-fachen, der Umfangslänge der Kreisscheibe (1) liegt.

8. Sägeblatt nach einem der Ansprüche 1 bis 7,
**dadurch gekennzeichnet, daß** in einem Bereich einer Kreisfläche, deren äußere Begrenzung durch den Umfang eines Kreises (K₂) mit maximal dem halben Radius (R) der Kreisscheibe (1) gebildet ist, ein, insbesondere eine zentrische Öffnung (5) aufweisender, Halterungsbereich (6) für mechanische Haltemittel, insbesondere zur Anlage und Zentrierung eines lösbar mit der Kreisscheibe (1) verbindbaren Halteflansches, angeordnet ist.

9. Sägeblatt nach einem der Ansprüche 1 bis 8,
**dadurch gekennzeichnet, daß** in einem inneren Bereich der Seitenflächen (3), insbesondere sich in radialer Richtung gesehen unmittelbar an den Halterungsbereich (6) für mechanische Haltemittel anschließend, weitere Luftdurchtrittsöffnungen (7), insbesondere kreisförmige Luftdurchtrittsöffnungen (7), angeordnet sind.

10. Sägeblatt nach einem der Ansprüche 1 bis 9,
**dadurch gekennzeichnet, daß** jeder der im äußeren Bereich der Seitenflächen (3) liegenden langlochartigen Luftdurchtrittsöffnungen (4) eine in einem/dem inneren Bereich der Seitenflächen (3) liegende Luftdurchtrittsöffnung (7) zugeordnet ist.

11. Sägeblatt nach Anspruch 10,
**dadurch gekennzeichnet, daß** eine in Drehrichtung (S) weisende vordere Begrenzung (4a) der im äußeren Bereich liegenden Luftdurchtrittsöffnungen (4) gegenüber einer in Drehrichtung (S) weisenden vorderen Begrenzung (7a) der zugeordneten, im inneren Bereich liegenden Luftdurchtrittsöffnungen (7) entgegen der Drehrichtung (S) jeweils um einen Winkel (α) von etwa 5° bis 35° versetzt ist.

12. Sägeblatt nach einem der Ansprüche 9 bis 11,
**dadurch gekennzeichnet, daß** die im inneren Bereich liegenden Luftdurchtrittsöffnungen (7) einseitig, insbesondere in der Seitenfläche (2), die bei der Montage dem zweiten Sägeblatt zugewandt ist, gesenkt sind.

13. Sägeblatt für eine Kreissäge, welches als Kreisscheibe (1) mit einem Radius (R) und einer Dicke (D) ausgebildet ist, wobei am Umfang der Kreisscheibe (1) Zähne (2) und in ihren, im wesentlichen kreisförmigen Seitenflächen (3) langlochartige Luftdurchtrittsöffnungen (4) angeordnet sind, insbesondere zur Verwendung für eine Kreissäge mit zwei parallelen, koaxial in einander entgegengesetzten Drehrichtungen (S) antreibbaren Sägeblättern, wobei eine jeweilige Längsausdehnung der langlochartigen Luftdurchtrittsöffnungen (4) in einer Richtung verläuft, die sich im Wesentlichen in einer Verlaufsrichtung eines umfangsgemäßen Bogens oder einer Sekante (Sk) durch die Seitenflächen (3) erstreckt, wobei die langlochartigen Luftdurchtrittsöffnungen (4) in einem äußeren durch eine Kreisringfläche gebildeten Bereich liegen, dessen äußere Begrenzung durch den Umfang eines Außenkreises (K₀) mit einem Radius in der Größe des etwa 0,75- bis 0,95-fachen des Radius (R) der Kreisscheibe (1) gebildet ist, und dessen innere Begrenzung durch den Umfang eines ersten Innenkreises (K₁) mit etwa dem halben Radius (R) der Kreisscheibe (1) gebildet sind,
**dadurch gekennzeichnet, daß** mindestens in einer Seitenfläche (2) der Kreisscheibe, (1) insbesondere der Seitenfläche (2), die bei der Montage dem zweiten Sägeblatt zugewandt ist, taschenartige Vertiefungen (8) ausgebildet sind, in denen die langlochartigen, in dem äußeren Bereich liegenden Luftdurchtrittsöffnungen (4), vorzugsweise am äußeren Rand (8a) der Vertiefungen (8), und gegebenenfalls in einem inneren Bereich der Seitenflächen (3), der sich insbesondere in radialer Richtung gesehen unmittelbar an einen Halterungsbereich (6) für mechanische Haltemittel anschließt, liegende Luftdurchtrittsöffnungen (7), vorzugsweise am inneren Rand (8b) der Vertiefungen (8), angeordnet sind.

14. Sägeblatt nach Anspruch 13,
**dadurch gekennzeichnet, daß** die Tiefe der taschenartigen Vertiefungen (8) etwa das 0,08- bis 0,12-fache der Dicke (D) der Kreisscheibe (1) beträgt.

15. Sägeblatt nach Anspruch 13 oder 14,
**dadurch gekennzeichnet, daß** zwischen den taschenartigen Vertiefungen (8) Rippen (9) verlaufen, deren Höhe gegenüber der Dicke (D) der Kreisscheibe (1), insbesondere etwa um das 0,01- bis 0,03-fache der Dicke (D) der Kreisscheibe (1) reduziert ist.

16. Sägeblatt nach Anspruch 15,
**dadurch gekennzeichnet, daß** die Rippen (9) von dem Halterungsbereich (6) für mechanische Haltemittel ausgehend entgegen der Drehrichtung (S) weisend zentrifugal nach außen verlaufen.

17. Sägeblatt nach Anspruch 15 oder 16,
**dadurch gekennzeichnet, daß** eine mittlere Breite (A) der Rippen (9) mindestens etwa das 0,15-fache des Radius (R) der Kreisscheibe (1) beträgt.

18. Sägeblatt nach einem der Ansprüche 15 bis 17,
**dadurch gekennzeichnet, daß** innerhalb mehrerer Rippen (9) kanalartige Vertiefungen (10) angeordnet sind.

19. Sägeblatt nach Anspruch 18,
**dadurch gekennzeichnet, daß** die Tiefe der kanalartigen Vertiefungen (10) etwa das 0,08- bis 0,12-fache der Dicke (D) der Kreisscheibe (1) beträgt.

20. Sägeblatt nach einem der Ansprüche 8 bis 19,
**dadurch gekennzeichnet, daß** im Halterungsbereich (6) für mechanische Haltemittel, insbesondere von dessen zentrischer Öffnung (5) ausgehend, zentrifugal nach außen verlaufende Schlitze (11) angeordnet sind.

21. Sägeblatt nach Anspruch 20,
**dadurch gekennzeichnet, daß** die Schlitze (11) entgegen der Drehrichtung (S) weisen.

22. Sägeblatt nach einem der Ansprüche 1 bis 21,
**dadurch gekennzeichnet, daß** im Umfangsbereich der Kreisscheibe (1) Dehnungsschlitze (12) vorgesehen sind.

23. Sägeblatt nach einem der Ansprüche 1 bis 22,
**dadurch gekennzeichnet, daß** mindestens jeweils eine Flankenfläche (13) der Zähne (2) insbesondere auf der Seite der Kreisscheibe (1), die bei der Montage dem zweiten Sägeblatt zugewandt ist, jeweils von einem Fuß (14) in Richtung auf eine Spitze (15) der Zähne (2) eine von einem Umfangsrand (U) der Seitenfläche (2) der Kreisscheibe (1) zurückweichende Neigung aufweist.

24. Sägeblatt nach Anspruch 23,
**dadurch gekennzeichnet, daß** die vom Umfangsrand (U) der Seitenfläche (2) der Kreisscheibe (1) zurückweichende jeweilige Flankenfläche (13) der Zähne (2) zur Seitenfläche (2) der Kreisscheibe (1) am Umfangsrand (U) eine Neigung im Bereich eines Winkels (δ) von etwa 1 ° bis 4°, vorzugsweise von 2° bis 3°, aufweist.

25. Sägeblatt nach einem der Ansprüche 13 bis 24,
**gekennzeichnet durch** die Merkmale des Kennzeichens eines der Ansprüche 1 bis 12.

## Claims

1. Saw blade for a circular saw, which saw blade is designed as a circular disc (1) having a radius (R) and a thickness (D), wherein teeth (2) are arranged on the circumference of the circular disc (1) and elongated-hole-like air passage openings (4) are arranged in its essentially circular side faces (3), in particular for use for a circular saw having two parallel saw blades which can be driven coaxially in opposite directions of rotation (S) to one another, wherein a respective longitudinal extent of the elongated-hole-like air passage openings (4) runs in a direction which extends essentially in a running direction of a circumferential arc or of a secant (Sk) through the side faces (3), wherein the elongated-hole-like air passage openings (4) lie in an outer region formed by an annular area, the outer boundary of which region is formed by the circumference of an outer circle (K₀) having a radius of about 0.75 to 0.95 times the radius (R) of the circular disc (1), and the inner boundary of which region is formed by the circumference of a first inner circle (K₁) having approximately half the radius (R) of the circular disc (1), **characterized in that** the elongated-hole-like air passage openings (4) have a width (C) within the range of about 0.09 to 0.17 times the radius (R) of the circular disc (1).

2. Saw blade according to Claim 1, **characterized in that** the inner boundary is formed by the circumference of a second inner circle (K₂) having a radius two thirds the size of the radius (R) of the circular disc (1).

3. Saw blade according to Claim 1 or 2, **characterized in that** the elongated-hole-like air passage openings (4) extend in a direction essentially parallel to the circumference, i.e. they intersect the radius (R) of the circular disc (1) at a right angle.

4. Saw blade according to Claim 1 or 2, **characterized in that** the elongated-hole-like air passage openings (4) extend essentially in the direction of a secant (Sk) which, in its essentially centrally running direction, intersects both the direction of rotation (S) at an acute angle (β) and a radial line (Rs) at an acute angle (γ), wherein the angle (β) between the secant (Sk) and the direction of rotation (S) is less than about 55° and is preferably within the range of about 10° to 30°, and the angle (γ) between the secant (Sk) and the radial line (Rs) is not less than about 45° and is preferably within the range of about 60° to 80°.

5. Saw blade according to one of Claims 1 to 4, **characterized by** a number of three to twelve, preferably six, elongated-hole-like air passage openings (4).

6. Saw blade according to one of Claims 1 to 5, **characterized in that** the elongated-hole-like air passage openings (4) have a width (C) within the range of about 0.11 to 0.14 times the radius (R) of the circular disc (1).

7. Saw blade according to one of Claims 1 to 6, **characterized in that** the sum of the lengths (L) of the elongated-hole-like air passage openings (4) has a total length which is approximately within the range of 0.2 to 0.6 times, preferably 0.4 times, the circumferential length of the circular disc (1).

8. Saw blade according to one of Claims 1 to 7, **characterized in that** a mounting region (6), having in particular a central opening (5), for mechanical holding means, in particular for bearing against and centring a holding flange which can be detachably connected to the circular disc (1), is arranged in a region of a circular area whose outer boundary is formed by the circumference of a circle (K₂) having at most half the radius (R) of the circular disc (1).

9. Saw blade according to one of Claims 1 to 8, **characterized in that** further air passage openings (7), in particular circular air passage openings (7), are arranged in an inner region of the side faces (3), in particular such as to directly adjoin the mounting region (6) for mechanical holding means as viewed in the radial direction.

10. Saw blade according to one of Claims 1 to 9, **characterized in that** an air passage opening (7) lying in a/the inner region of the side faces (3) is assigned to each of the elongated-hole-like air passage openings (4) lying in the outer region of the side faces (3).

11. Saw blade according to Claim 10, **characterized in that** a front boundary (4a), pointing in the direction of rotation (S), of the air passage openings (4) lying in the outer region is offset against the direction of rotation (S) in each case by an angle (α) of about 5° to 35° relative to a front boundary (7a), pointing in the direction of rotation (S), of the associated air passage openings (7) lying in the inner region.

12. Saw blade according to one of Claims 9 to 11, **characterized in that** the air passage openings (7) lying in the inner region are sunk on one side, in particular in the side face (3) which faces the second saw blade during fitting.

13. Saw blade for a circular saw, which saw blade is designed as a circular disc (1) having a radius (R) and a thickness (D), wherein teeth (2) are arranged on the circumference of the circular disc (1) and elongated-hole-like air passage openings (4) are arranged in its essentially circular side faces (3), in particular for use for a circular saw having two parallel saw blades which can be driven coaxially in opposite directions of rotation (S) to one another, wherein a respective longitudinal extent of the elongated-hole-like air passage openings (4) runs in a direction which extends essentially in a running direction of a circumferential arc or of a secant (Sk) through the side faces (3), wherein the elongated-hole-like air passage openings (4) lie in an outer region formed by an annular area, the outer boundary of which region is formed by the circumference of an outer circle (K₀) having a radius of about 0.75 to 0.95 times the radius (R) of the circular disc (1), and the inner boundary of which region is formed by the circumference of a first inner circle (K₁) having approximately half the radius (R) of the circular disc (1), **characterized in that** pocket-like recesses (8) are formed at least in one side face (3) of the circular disc (1), in particular the side face (3) which faces the second saw blade during fitting, in which pocket-like recesses (8) the elongated-hole-like air passage openings (4) lying in the outer region are arranged, preferably at the outer margin (8a) of the recesses (8), and in which air passage openings (7) possibly lying in an inner region of the side faces (3) which directly adjoins a mounting region (6) for mechanical holding means as viewed in particular in the radial direction are arranged, preferably at the inner margin (8b) of the recesses (8).

14. Saw blade according to Claim 13, **characterized in that** the depth of the pocket-like recesses (8) is about 0.08 to 0.12 times the thickness (D) of the circular disc (1).

15. Saw blade according to Claim 13 or 14, **characterized in that** ribs (9) run between the pocket-like recesses (8), the height of which ribs (9) is reduced relative to the thickness (D) of the circular disc (1), in particular by about 0.01 to 0.03 times the thickness (D) of the circular disc (1).

16. Saw blade according to Claim 15, **characterized in that** the ribs (9), starting from the mounting region (6) for mechanical holding means, run such as to point centrifugally outwards against the direction of rotation (S).

17. Saw blade according to Claim 15 or 16, **characterized in that** an average width (A) of the ribs (9) is at least about 0.15 times the radius (R) of the circular disc (1).

18. Saw blade according to one of Claims 15 to 17, **characterized in that** channel-like recesses (10) are arranged within a plurality of ribs (9).

19. Saw blade according to Claim 18, **characterized in that** the depth of the channel-like recesses (10) is about 0.08 to 0.12 times the thickness (D) of the circular disc (1).

20. Saw blade according to one of Claims 8 to 19, **characterized in that** slots (11) running centrifugally outwards are arranged in the mounting region (6) for mechanical holding means, in particular starting from its central opening (5).

21. Saw blade according to Claim 20, **characterized in that** the slots (11) point against the direction of rotation (S).

22. Saw blade according to one of Claims 1 to 21, **characterized in that** expansion slots (12) are provided in the circumferential region of the circular disc (1).

23. Saw blade according to one of Claims 1 to 22, **characterized in that** at least one respective flank surface (13) of the teeth (2), in particular on that side of the circular disc (1) which faces the second saw blade during fitting, has a slope receding from a circumferential margin (U) of the side face (3) of the circular disc (1), said slope extending from a respective root (14) in the direction of a tip (15) of the teeth (2).

24. Saw blade according to Claim 23, **characterized in that** the respective flank surface (13), receding from the circumferential margin (U) of the side face (3) of the circular disc (1), of the teeth (2) slopes at an angle (δ) within the range of about 1° to 4°, preferably 2° to 3°, relative to the side face (3) of the circular disc (1) at the circumferential margin (U).

25. Saw blade according to one of Claims 13 to 24, **characterized by** the features of the characterizing part of one of Claims 1 to 12.

## Revendications

1. Lame de scie pour une scie circulaire, qui est réalisée sous forme de disque circulaire (1) de rayon (R) et d'épaisseur (D), des dents (2) étant disposées sur la circonférence du disque circulaire (1) et des ouvertures de passage d'air (4) en forme de trous oblongs étant disposées dans leurs surfaces latérales (3) essentiellement circulaires, notamment pour l'utilisation pour une scie circulaire ayant deux lames de scie parallèles pouvant être entraînées coaxialement dans des sens de rotation (S) opposés, une étendue longitudinale respective des ouvertures de passage d'air (4) en forme de trous oblongs étant orientée dans une direction qui s'étend essentiellement dans une direction d'avance d'un arc rapporté à la circonférence ou d'une sécante (Sk) à travers les surfaces latérales (3), les ouvertures de passage d'air (4) en forme de trous oblongs se situant dans une région extérieure formée par une surface annulaire circulaire, dont la limite extérieure est formée par la circonférence d'un cercle extérieur (K₀) ayant un rayon de l'ordre d'environ 0,75 à 0,95 fois le rayon (R) du disque circulaire (1), et dont la limite intérieure est formée par la circonférence d'un premier cercle intérieur (K₁) ayant un rayon d'approximativement la moitié du rayon (R) du disque circulaire (1),
**caractérisée en ce que** les ouvertures de passage d'air (4) en forme de trous oblongs présentent une largeur (C) qui possède une dimension de l'ordre d'environ 0,09 à 0,17 fois le rayon (R) du disque circulaire (1).

2. Lame de scie selon la revendication 1,
**caractérisée en ce que** la limite intérieure est formée par la circonférence d'un deuxième cercle intérieur (K₂) ayant un rayon qui mesure deux tiers du rayon (R) du disque circulaire (1).

3. Lame de scie selon la revendication 1 ou 2,
**caractérisée en ce que** les ouvertures de passage d'air (4) en forme de trous oblongs s'étendent essentiellement dans une direction circonférentielle parallèle, c'est-à-dire qu'elles coupent le rayon (R) du disque circulaire (1) à angle droit.

4. Lame de scie selon la revendication 1 ou 2,
**caractérisée en ce que** les ouvertures de passage d'air (4) en forme de trous oblongs s'étendent essentiellement dans la direction d'une sécante (Sk), qui dans sa direction orientée essentiellement centralement coupe la direction de rotation (S) suivant un angle aigu (β) ainsi qu'un faisceau radial (Rs) suivant un angle aigu (γ), l'angle (β) entre la sécante (Sk) et le sens de rotation (S) étant inférieur à environ 55° et étant de préférence de l'ordre d'environ 10° à 30°, et l'angle (γ) entre la sécante (Sk) et le faisceau radial (Rs) n'étant pas inférieur à environ 45° et étant de préférence de l'ordre d'environ 60° à 80°.

5. Lame de scie selon l'une quelconque des revendications 1 à 4,
**caractérisée par** un nombre de trois à douze, de préférence de six, ouvertures de passage d'air (4) en forme de trous oblongs.

6. Lame de scie selon l'une quelconque des revendications 1 à 5,
**caractérisée en ce que**
les ouvertures de passage d'air (4) en forme de trous oblongs présentent une largeur (C) qui possède une dimension de l'ordre d'environ 0,11 à 0,14 fois le rayon (R) du disque circulaire (1).

7. Lame de scie selon l'une quelconque des revendications 1 à 6,
**caractérisée en ce que** la somme des longueurs (L) des ouvertures de passage d'air (4) en forme de trous oblongs donne une longueur totale qui est de l'ordre d'environ 0,2 à 0,6 fois, de préférence de 0,4 fois la longueur circonférentielle du disque circulaire (1).

8. Lame de scie selon l'une quelconque des revendications 1 à 7,
**caractérisée en ce que** dans une région d'une surface circulaire dont la limite extérieure est formée par la circonférence d'un cercle (K₂) ayant au maximum un rayon de la moitié du rayon (R) du disque circulaire (1), est disposée une région de fixation (6) présentant notamment une ouverture centrale (5), pour des moyens de fixation mécaniques, notamment pour l'application et le centrage d'une bride de fixation pouvant être connectée de manière amovible au disque circulaire (1).

9. Lame de scie selon l'une quelconque des revendications 1 à 8, **caractérisée en ce que** dans une région intérieure des surfaces latérales (3), en particulier se raccordant, vu dans la direction radiale, directement à la région de fixation (6) pour des moyens de fixation mécaniques, sont disposées d'autres ouvertures de passage d'air (7), en particulier des ouvertures de passage d'air circulaires (7).

10. Lame de scie selon l'une quelconque des revendications 1 à 9, **caractérisée en ce que** chacune des ouvertures de passage d'air (4) en forme de trous oblongs se trouvant dans la région extérieure des surfaces latérales (3) est associée à une ouverture de passage d'air (7) située dans une ou dans la région intérieure des surfaces latérales (3).

11. Lame de scie selon la revendication 10, **caractérisée en ce qu'**une limitation avant (4a) orientée dans le sens de rotation (S) des ouvertures de passage d'air (4) situées dans la région extérieure est décalée par rapport à une limitation avant (7a) orientée dans le sens de rotation (S) des ouvertures de passage d'air (7) associées situées dans la région intérieure, à l'encontre du sens de rotation (S) et suivant à chaque fois un angle (α) d'environ 5° à 35°.

12. Lame de scie selon l'une quelconque des revendications 9 à 11, **caractérisée en ce que** les ouvertures de passage d'air (7) situées dans la région intérieure, en particulier dans la surface latérale (3) qui est tournée lors du montage vers la deuxième lame de scie, sont renfoncées.

13. Lame de scie pour une scie circulaire qui est réalisée sous forme de disque circulaire (1) de rayon (R) et d'épaisseur (D), des dents (2) étant disposées sur la circonférence du disque circulaire (1) et des ouvertures de passage d'air (4) en forme de trous oblongs étant disposées dans leurs surfaces latérales (3) essentiellement circulaires, notamment pour l'utilisation pour une scie circulaire ayant deux lames de scie parallèles pouvant être entraînées coaxialement dans des sens de rotation (S) opposés, une étendue longitudinale respective des ouvertures de passage d'air (4) en forme de trous oblongs étant orientée dans une direction qui s'étend essentiellement dans une direction d'avance d'un arc rapporté à la circonférence ou d'une sécante (Sk) à travers les surfaces latérales (3), les ouvertures de passage d'air (4) en forme de trous oblongs se situant dans une région extérieure formée par une surface annulaire circulaire, dont la limite extérieure est formée par la circonférence d'un cercle extérieur (K₀) ayant un rayon de l'ordre d'environ 0,75 à 0,95 fois le rayon (R) du disque circulaire (1), et dont la limite intérieure est formée par la circonférence d'un premier cercle intérieur (K₁) ayant un rayon d'approximativement la moitié du rayon (R) du disque circulaire (1),
**caractérisée en ce**
**qu'**au moins dans une surface latérale (3) du disque circulaire (1), en particulier la surface latérale (3) qui est tournée lors du montage vers la deuxième lame de scie, sont réalisés des renfoncements (8) en forme de poche, dans lesquels sont pratiquées les ouvertures de passage d'air (4) en forme de trous oblongs situées dans la région extérieure, de préférence sur le bord extérieur (8a) des renfoncements (8), et éventuellement des ouvertures de passage d'air (7) situées dans une région intérieure des surfaces latérales (3) qui se raccorde, en particulier vu dans la direction radiale, directement à une région de fixation (6) pour des moyens de fixation mécaniques, sont disposées de préférence sur le bord intérieur (8b) des renfoncements (8).

14. Lame de scie selon la revendication 13, **caractérisée en ce que** la profondeur des renfoncements en forme de poche (8) vaut environ 0,08 à 0,12 fois l'épaisseur (D) du disque circulaire (1).

15. Lame de scie selon la revendication 13 ou 14, **caractérisée en ce qu'**entre les renfoncements en forme de poche (8) s'étendent des nervures (9) dont la hauteur est réduite par rapport à l'épaisseur (D) du disque circulaire (1), notamment d'environ 0,01 à 0,03 fois l'épaisseur (D) du disque circulaire (1).

16. Lame de scie selon la revendication 15, **caractérisée en ce que** les nervures (9) s'étendent à partir de la région de fixation (6) pour des moyens de fixation mécaniques, à l'encontre du sens de rotation (S), centrifugalement vers l'extérieur.

17. Lame de scie selon la revendication 15 ou 16, **caractérisée en ce qu'**une largeur moyenne (A) des nervures (9) vaut au moins environ 0,15 fois le rayon (R) du disque circulaire (1).

18. Lame de scie selon l'une quelconque des revendications 15 à 17, **caractérisée en ce que** des renfoncements en forme de canaux (10) sont disposés à l'intérieur de plusieurs nervures (9).

19. Lame de scie selon la revendication 18, **caractérisée en ce que** la profondeur des renfoncements en forme de canaux (10) vaut environ 0,08 à 0,12 fois l'épaisseur (D) du disque circulaire (1).

20. Lame de scie selon l'une quelconque des revendications 8 à 19, **caractérisée en ce que** dans la région de fixation (6) pour des moyens de fixation mécaniques, en particulier à partir de son ouverture centrale (5), sont disposées des fentes (11) s'étendant centrifugalement vers l'extérieur.

21. Lame de scie selon la revendication 20, **caractérisée en ce que** les fentes (11) sont orientées dans le sens opposé au sens de rotation (S).

22. Lame de scie selon l'une quelconque des revendications 1 à 21, **caractérisée en ce que** dans la région de la circonférence du disque circulaire (1) sont prévues des fentes de dilatation (12).

23. Lame de scie selon l'une quelconque des revendications 1 à 22, **caractérisée en ce qu'**au moins une surface de flanc (13) des dents (2), en particulier du côté du disque circulaire (1) qui est tourné vers la deuxième lame de scie lors du montage, à chaque fois depuis une base (14) dans la direction d'une pointe (15) des dents (2), présente une inclinaison en retrait d'un bord circonférentiel (U) de la surface latérale (3) du disque circulaire (1).

24. Lame de scie selon la revendication 23, **caractérisée en ce que** la surface de flanc (13) respective des dents (2) en retrait du bord circonférentiel (U) de la surface latérale (3) du disque circulaire (1) présente par rapport à la surface latérale (3) du disque circulaire (1) sur le bord circonférentiel (U) une inclinaison de l'ordre d'un angle (ε) d'environ 1° à 4°, de préférence de 2° à 3°.

25. Lame de scie selon l'une quelconque des revendications 13 à 24, **caractérisée par** les caractéristiques de l'une quelconque des revendications 1 à 12.
